# FASCICULE DE BREVET EUROPEEN

(11) **EP 3 494 653 B1**
(45) Date de publication et mention de la délivrance du brevet: **04.11.2020**
(21) Numéro de dépôt: 17809264.9
(22) Date de dépôt: 01.12.2017
(51) Int. Cl.: H04B 7/185

(54) **SYSTÈMES DE TÉLÉCOMMUNICATIONS PAR SATELLITE COMPORTANT UN LIEN PASSERELLE OPTIQUE ET UN LIEN PASSERELLE RADIOÉLECTRIQUE, PROCÉDÉ DE CONTRÔLE**
SATELLITENTELEKOMMUNIKATIONSSYSTEM MIT EINER OPTISCHEN GATEWAY-VERBINDUNG UND EINER FUNK-GATEWAY-VERBINDUNG UND STEUERUNGSVERFAHREN
SATELLITE TELECOMMUNICATIONS SYSTEM COMPRISING AN OPTICAL GATEWAY LINK AND A RADIO GATEWAY LINK, AND CONTROL METHOD

(30) Priorité: 02.12.2016 FR 1661846
(43) Date de publication de la demande: 12.06.2019
(73) Titulaire: Airbus Defence and Space SAS, 31402 Toulouse Cedex 4 (FR)
(72) Inventeur: LAURENT, Bernard, 31402 Toulouse Cedex 4 (FR)
(74) Mandataire: Ipside
(86) Numéro de dépôt international: PCT/EP2017/081228
(87) Numéro de publication internationale: WO 2018/100180

(56) Documents cités:
- WO-A1-2009/051907
- WO-A2-2016/022579
- US-A1- 2016 269 116
- US-B1- 7 925 167

## Description

### DOMAINE TECHNIQUE

La présente invention appartient au domaine des systèmes de télécommunications par satellite, et concerne une charge utile de satellite, un système de télécommunications par satellite comportant un satellite avec une telle charge utile, ainsi qu'un procédé de contrôle et un procédé d'augmentation de capacité d'un système de télécommunications par satellite.

### ÉTAT DE LA TECHNIQUE

De manière conventionnelle, un satellite de télécommunications comporte une charge utile équipée de moyens adaptés à échanger des données avec une ou plusieurs stations passerelles terrestres, et avec un ou plusieurs terminaux utilisateurs terrestres. Par « terrestre », on entend à la surface de la Terre, notamment à même le sol, en haut d'un bâtiment, d'un pylône, etc., immobile ou mobile (véhicule terrestre, maritime ou aéronautique).

Chaque station passerelle réalise, pour le satellite, un point d'accès à un cœur de réseau terrestre. Ainsi, une station passerelle qui reçoit, à partir du cœur de réseau, des données à destination d'un terminal utilisateur les émet à destination du satellite qui les retransmet à destination dudit terminal utilisateur. De manière analogue, le terminal utilisateur peut émettre des données à destination du satellite, qui les retransmet à destination d'une station passerelle, qui les retransmet vers le cœur de réseau.

Les échanges de données entre d'une part le satellite et les terminaux utilisateurs et, d'autre part, entre le satellite et les stations passerelles, se font sous la forme de signaux radioélectriques. Par « signal radioélectrique », on entend une onde électromagnétique dont les fréquences sont comprises dans le spectre traditionnel des ondes radioélectriques (quelques hertz à plusieurs centaines de gigahertz).

De nos jours, il existe un besoin important d'augmenter la capacité des systèmes de télécommunications par satellite existants, notamment pour offrir des services haut débit, dits à bande large (« broadband » dans la littérature anglo-saxonne), et/ou pour desservir plus de terminaux utilisateurs, etc.

Toutefois, la capacité des systèmes de télécommunications par satellite existants est limitée notamment par le fait que les bandes de fréquences radioélectriques constituent une ressource limitée et dont l'utilisation est soumise à une autorisation administrative qui est incertaine et doit être demandée de nombreuses années en avance. En outre, les bandes de fréquences radioélectriques sont soumises à de nombreuses interférences, notamment générées par des systèmes de télécommunications terrestres. Enfin, l'augmentation de la capacité d'un système de télécommunications par satellite existant doit de préférence être réalisée en assurant une compatibilité avec les terminaux utilisateurs existants.

Il existe des systèmes de télécommunications par satellite utilisant des communications optiques, autorisant ainsi des débits de transmissions sensiblement plus élevés qu'avec des communications par radiofréquences. En particulier, la demande de brevet WO 2016/022579 divulgue un module de satellite comprenant un transmetteur optique pour transmettre des données à un terminal à distance, un récepteur pour acquérir une balise optique de ce terminal, et un module de pointage de précision configuré pour pointer le transmetteur optique vers le terminal à distance de façon à obtenir un lien de communications entre le module pour satellite et le terminal à distance.

Ces systèmes ont cependant pour inconvénient de requérir l'établissement d'une liaison optique, vulnérable à des indisponibilités d'une telle liaison.

### EXPOSÉ DE L'INVENTION

La présente invention a pour objectif de remédier à tout ou partie des limitations des solutions de l'art antérieur, notamment celles exposées ci-avant.

A cet effet, et selon un premier aspect, l'invention concerne une charge utile de satellite d'un système de télécommunications par satellite, ladite charge utile comportant un module de communication, dit module utilisateur, adapté à échanger des données avec au moins un terminal utilisateur terrestre. Ladite charge utile comporte un module de communication, dit module passerelle, adapté à échanger des données sous la forme de signaux optiques avec au moins une station passerelle optique terrestre.

Ainsi, la charge utile est configurée pour échanger des données, avec des stations passerelles optiques, sous la forme de signaux optiques. Par « signal optique », on entend une onde électromagnétique dont les longueurs d'ondes sont comprises entre 0,4 micromètres (µm) et 11 µm.

L'utilisation d'une liaison optique pour les échanges de données entre la charge utile du satellite et les stations passerelles présente de nombreux avantages. Notamment, une liaison optique permet d'avoir des débits de données très élevés, et l'utilisation de bandes de fréquences optiques ne nécessite pas de requérir une autorisation administrative préalable.

En outre, l'utilisation de bandes de fréquences optiques peut ne concerner que les échanges de données avec les stations passerelles terrestres, sur un lien passerelle du satellite (« feeder link » dans la littérature anglo-saxonne). Les échanges de données avec les terminaux utilisateurs, sur un lien utilisateur du satellite (« user link » dans la littérature anglo-saxonne), peuvent être réalisés sous la forme de signaux radioélectriques et, de préférence, être compatibles avec les terminaux utilisateurs existants qui n'ont alors pas à être modifiés ou échangés.

Dans des modes particuliers de réalisation, la charge utile peut comporter en outre l'une ou plusieurs des caractéristiques suivantes, prises isolément ou selon toutes les combinaisons techniquement possibles.

Dans des modes particuliers de réalisation, le module passerelle est adapté en outre à échanger des données sous la forme de signaux radioélectriques avec au moins une station passerelle radioélectrique terrestre.

En effet, en cas d'absence de trajet optique entre le satellite embarquant la charge utile et la station passerelle optique (par exemple du fait de la présence de nuages entre le satellite et la station passerelle optique), il n'est pas possible d'échanger des données avec la station passerelle optique sous la forme de signaux optiques. Dans un tel cas, les échanges de données peuvent néanmoins se faire sous la forme de signaux radioélectriques à destination d'une station passerelle radioélectrique, avec toutefois une capacité réduite par rapport à la capacité possible sur la liaison optique.

Dans des modes particuliers de réalisation, le module utilisateur est adapté à échanger des données sous la forme de signaux radioélectriques avec le terminal utilisateur.

Dans des modes particuliers de réalisation, le module utilisateur est adapté à échanger des données sous la forme de signaux optiques avec au moins un terminal utilisateur optique terrestre.

Dans des modes particuliers de réalisation, le module utilisateur est un module de communication multifaisceaux, pouvant mettre en œuvre toute technique connue de formation de faisceaux (utilisant une source par faisceau - « Single Feed Per Beam » dans la littérature anglo-saxonne - ou utilisant plusieurs sources par faisceau - « Multi Feed Per Beam » dans la littérature anglo-saxonne - avec un réseau de formation de faisceaux fixe ou variable ou utilisant une antenne active, etc.), y compris utilisant une technique à saut de faisceaux (« beam hopping » dans la littérature anglo-saxonne).

Selon un second aspect, l'invention concerne un système de télécommunications par satellite, comportant au moins un terminal utilisateur terrestre, et au moins un satellite en orbite terrestre, dit satellite à passerelle optique, comportant une charge utile selon l'un quelconque des modes de réalisation de l'invention. Le module utilisateur de ladite charge utile est adapté à échanger des données avec ledit terminal utilisateur, et le module passerelle de ladite charge utile est adapté à échanger des données avec au moins une station passerelle optique.

Dans des modes particuliers de réalisation, le système de télécommunications par satellite peut comporter en outre l'une ou plusieurs des caractéristiques suivantes, prises isolément ou selon toutes les combinaisons techniquement possibles.

Dans des modes particuliers de réalisation, le système de télécommunications par satellite comporte un module de contrôle configuré pour déterminer si un trajet optique existe entre le satellite à passerelle optique et une station passerelle optique et, le module passerelle du satellite à passerelle optique étant adapté à échanger des données sous la forme de signaux radioélectriques avec une station passerelle radioélectrique, pour router les données du terminal utilisateur vers une station passerelle radioélectrique en cas d'absence de trajet optique.

Dans des modes particuliers de réalisation, le satellite à passerelle optique est en orbite terrestre basse altitude (« Low Earth Orbit » ou LEO dans la littérature anglo-saxonne).

Dans des modes particuliers de réalisation, le système de télécommunications par satellite comporte au moins deux stations passerelles optiques distantes agencées de sorte à permettre l'existence simultanée de trajets optiques entre le satellite à passerelle optique et chacune des deux stations passerelles optiques. De telles dispositions permettent d'utiliser plus souvent une liaison optique. En effet, même en cas de présence de nuages, ceux-ci peuvent bloquer l'un uniquement des trajets optiques, de sorte que la probabilité d'avoir au moins un trajet optique non bloqué est augmentée.

Dans des modes particuliers de réalisation, le système de télécommunications par satellite comporte au moins un satellite, dit satellite à passerelle exclusivement radioélectrique, comportant un module de communication, dit module utilisateur, adapté à échanger des données avec ledit terminal utilisateur, et un module de communication, dit module passerelle, adapté à échanger des données uniquement sous la forme de signaux radioélectriques avec au moins une station passerelle radioélectrique. De tels modes de réalisation correspondent notamment au cas d'une augmentation de la capacité d'un système de télécommunications par satellite existant, par l'ajout d'un satellite comportant une charge utile selon l'un quelconque des modes de réalisation de l'invention.

Dans des modes particuliers de réalisation, le système de télécommunications par satellite comporte un module de contrôle configuré pour déterminer si un trajet optique existe entre le satellite à passerelle optique et une station passerelle optique, et pour router les données du terminal utilisateur vers le satellite à passerelle exclusivement radioélectrique en cas d'absence de trajet optique.

Dans des modes particuliers de réalisation, le système de télécommunications par satellite comporte une pluralité de terminaux utilisateurs adaptés à échanger des données avec le satellite à passerelle exclusivement radioélectrique et avec le satellite à passerelle optique, et un module de contrôle configuré pour répartir les terminaux utilisateurs entre le satellite à passerelle exclusivement radioélectrique et le satellite à passerelle optique en cas d'existence de trajet optique entre le satellite à passerelle optique et une station passerelle optique.

Ainsi, en cas d'existence d'un trajet optique entre le satellite à passerelle optique et une station passerelle optique, les terminaux utilisateurs peuvent être desservis par deux satellites différents, l'un à passerelle exclusivement radioélectrique, l'autre à passerelle optique. Lesdits terminaux utilisateurs peuvent alors être répartis entre le satellite à passerelle exclusivement radioélectrique et le satellite à passerelle optique, en mettant en œuvre des techniques d'allocation de ressources, et en tenant compte de la plus grande capacité de la liaison optique entre le satellite à passerelle optique et la station passerelle optique.

Dans des modes particuliers de réalisation, le module de contrôle est configuré pour répartir lesdits terminaux utilisateurs entre le satellite à passerelle exclusivement radioélectrique et le satellite à passerelle optique en fonction d'au moins un paramètre parmi les paramètres suivants :
- débit des données requis pour chaque terminal utilisateur,
- niveau de qualité de service requis pour chaque terminal utilisateur,
- type d'application utilisé par chaque terminal utilisateur,
- nombre de terminaux utilisateurs à servir par faisceau, etc.

Dans des modes particuliers de réalisation, le module de contrôle est configuré pour contrôler le débit de données de chaque terminal utilisateur en fonction de l'existence ou de l'absence d'un trajet optique entre le satellite à passerelle optique et la station passerelle optique.

Selon un troisième aspect, l'invention concerne un procédé de contrôle d'un système de télécommunications par satellite comportant au moins un satellite à passerelle exclusivement radioélectrique et au moins un satellite à passerelle optique. Plusieurs terminaux utilisateurs étant adaptés à échanger des données avec le satellite à passerelle exclusivement radioélectrique et avec le satellite à passerelle optique, le procédé de contrôle comporte :
- une détermination si un trajet optique existe entre le satellite à passerelle optique et une station passerelle optique terrestre,
- en cas d'absence de trajet optique : un routage des données des terminaux utilisateurs vers le satellite à passerelle exclusivement radioélectrique,
- en cas d'existence de trajet optique : une répartition des terminaux utilisateurs entre le satellite à passerelle exclusivement radioélectrique et le satellite à passerelle optique.

Dans des modes particuliers de mise en œuvre, le procédé de contrôle peut comporter en outre l'une ou plusieurs des caractéristiques suivantes, prises isolément ou selon toutes les combinaisons techniquement possibles.

Dans des modes particuliers de mise en œuvre, la répartition des terminaux utilisateurs entre le satellite à passerelle exclusivement radioélectrique et le satellite à passerelle optique est déterminée en fonction d'au moins un paramètre parmi les paramètres suivants :
- débit des données requis pour chaque terminal utilisateur,
- niveau de qualité de service requis pour chaque terminal utilisateur,
- type d'application utilisé par chaque terminal utilisateur,
- nombre de terminaux utilisateurs à servir par faisceau, etc.

Dans des modes particuliers de mise en œuvre, le procédé de contrôle comporte un contrôle d'un débit de données de chaque terminal utilisateur en fonction de l'existence ou de l'absence d'un trajet optique entre le satellite à passerelle optique et une station passerelle optique.

Selon un quatrième aspect, l'invention concerne un produit programme d'ordinateur comportant un ensemble d'instructions de code de programme qui, lorsqu'elles sont exécutées par un processeur, configurent ledit processeur pour mettre en œuvre un procédé de contrôle selon l'un quelconque des modes de mise en œuvre de l'invention.

Selon un cinquième aspect, l'invention concerne un procédé d'augmentation de capacité d'un système de télécommunications par satellite comportant au moins un terminal utilisateur terrestre et au moins un satellite en orbite terrestre, dit satellite à passerelle exclusivement radioélectrique, comportant un module de communication, dit module utilisateur, adapté à échanger des données avec ledit terminal utilisateur, et un module de communication, dit module passerelle, adapté à échanger des données uniquement sous la forme de signaux radioélectriques avec au moins une station passerelle radioélectrique. Le procédé d'augmentation de capacité comporte une mise à poste en orbite terrestre d'au moins un satellite, dit satellite à passerelle optique, comportant un module de communication, dit module utilisateur, adapté à échanger des données avec ledit terminal utilisateur et un module de communication, dit module passerelle, adapté à échanger des données sous la forme de signaux optiques avec au moins une station passerelle optique terrestre.

Dans des modes particuliers de mise en œuvre, le procédé d'augmentation de capacité peut comporter en outre l'une ou plusieurs des caractéristiques suivantes, prises isolément ou selon toutes les combinaisons techniquement possibles.

Dans des modes particuliers de mise en œuvre, le procédé d'augmentation de capacité comporte un déploiement progressif de stations passerelles optiques.

Dans des modes particuliers de mise en œuvre, le procédé d'augmentation de capacité comporte en outre, après la mise à poste du satellite à passerelle optique, un contrôle du système de télécommunications par satellite conformément à un procédé de contrôle selon l'un quelconque des modes de mise en œuvre de l'invention.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'une charge utile de satellite à passerelle optique,
- Figure 2 : une représentation schématique d'un exemple de réalisation d'un système de télécommunications par satellite,
- Figure 3 : une représentation schématique d'une variante de réalisation du système de télécommunications par satellite de la figure 2,
- Figure 4 : une représentation schématique d'un mode préféré de réalisation d'un système de télécommunications par satellite,
- Figure 5 : un diagramme représentant les principales étapes d'un procédé de contrôle d'un système de télécommunications par satellite.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

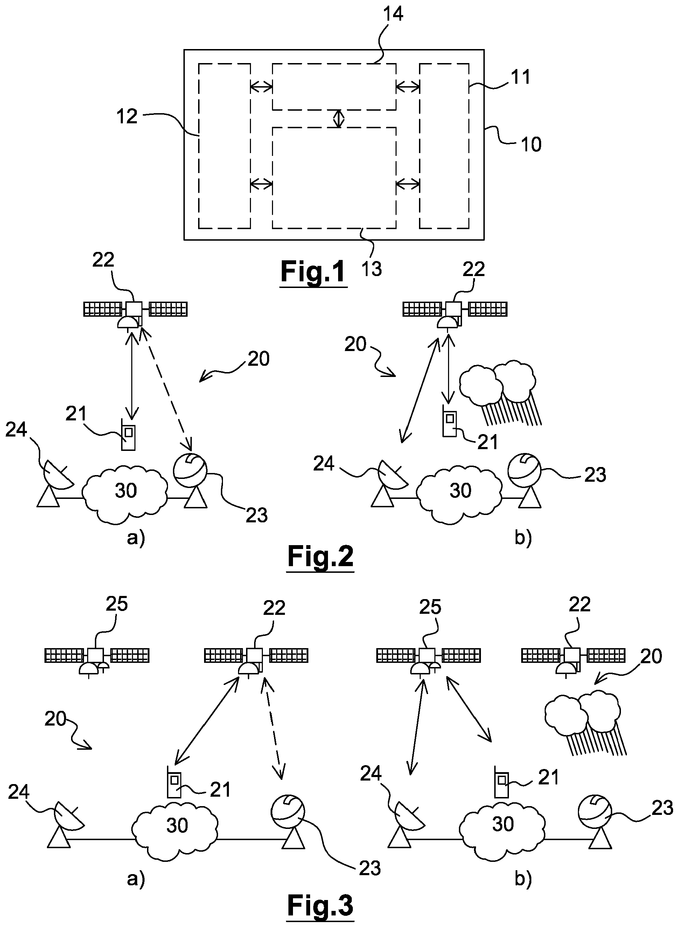

La figure 1 représente schématiquement un exemple de réalisation d'une charge utile 10 pour un satellite destiné à être placé en orbite terrestre, dit satellite à passerelle optique 22.

Tel qu'illustré par la figure 1, la charge utile 10 comporte un module de communication, dit module utilisateur 11, adapté à échanger des données sur un lien utilisateur avec des terminaux utilisateurs 21 terrestres. La charge utile 10 comporte également un module de communication, dit module passerelle 12, adapté à échanger des données sur un lien passerelle sous la forme de signaux optiques avec au moins une station passerelle optique 23 terrestre.

Tel qu'indiqué précédemment, la station passerelle optique 23 réalise, pour le satellite à passerelle optique 22, un point d'accès à un cœur de réseau 30 terrestre. Ainsi, une station passerelle optique 23 qui reçoit, à partir du cœur de réseau 30, des données à destination d'un terminal utilisateur 21 les émet à destination du module passerelle 12 du satellite à passerelle optique 22 qui les retransmet par le module utilisateur 11 à destination dudit terminal utilisateur 21. De manière analogue, le terminal utilisateur peut émettre des données à destination du module utilisateur 11 du satellite à passerelle optique 22, qui les retransmet par le module passerelle 12 à destination d'une station passerelle optique 23, qui les retransmet à son tour vers le cœur de réseau 30.

La charge utile 10 comporte également d'autres équipements, comme par exemple un module de démultiplexage/multiplexage 13, qui réalise l'interface entre le module utilisateur 11 et le module passerelle 12, ainsi qu'un module de commande 14 du module de démultiplexage/multiplexage 13. Le module de commande 14 et le module de démultiplexage/multiplexage 13 sortent du cadre de l'invention, et peuvent prendre toute forme adaptée.

Le module passerelle 12 comporte par exemple un circuit optique adapté à échanger des données sous la forme de signaux optiques. Les données échangées sous la forme de signaux optiques par ledit module passerelle 12 comportent de préférence à la fois des données utiles et des données de contrôle. Il est à noter que le module passerelle 12 peut comporter plusieurs circuits optiques permettant d'établir simultanément plusieurs liaisons optiques avec des stations passerelles optiques 23 respectives différentes.

Dans des modes particuliers de réalisation, le module passerelle 12 est en outre adapté à échanger des données sous la forme de signaux radioélectriques avec au moins une station passerelle radioélectrique 24. A cet effet, le module passerelle 12 comporte par exemple en outre un ou plusieurs circuits radioélectriques adaptés à échanger des données sous la forme de signaux radioélectriques, par exemple dans une ou plusieurs bandes de fréquences radioélectriques parmi les bandes Q, V, Ka, Ku, L, etc.

En d'autres termes, dans de tels modes de réalisation, le module passerelle 12 est hybride en ce qu'il peut échanger sur le lien passerelle des données à la fois sous la forme de signaux optiques et sous la forme de signaux radioélectriques. De telles dispositions sont avantageuses en ce qu'il n'est pas toujours possible d'établir une liaison optique entre le satellite à passerelle optique 22 et une station passerelle optique 23. Notamment, en cas de présence de nuages entre le satellite à passerelle optique 22 et la station passerelle optique 23, il n'existe pas de trajet optique permettant d'établir une liaison optique sur le lien passerelle. Dans un tel cas, le module passerelle 12 du satellite à passerelle optique 22 peut établir une liaison radioélectrique avec une station passerelle radioélectrique 24. En effet, une liaison radioélectrique est moins sensible aux perturbations météorologiques qu'une liaison optique, et est donc plus souvent disponible qu'une liaison optique. Une telle solution permet donc de bénéficier, sur le lien passerelle, à la fois de la plus forte disponibilité de la liaison radioélectrique et de la plus forte capacité de la liaison optique, lorsque celle-ci est disponible.

Le module utilisateur 11 comporte par exemple un ou plusieurs circuits radioélectriques adaptés à échanger des données sous la forme de signaux radioélectriques, par exemple dans une ou plusieurs bandes de fréquences radioélectriques parmi les bandes Q, V, Ka, Ku, L, etc. Les données échangées par le module utilisateur 11 comportent de préférence à la fois des données utiles et des données de contrôle.

De préférence, le module utilisateur 11 est un module de communication multifaisceaux, c'est-à-dire adapté à former sur le lien utilisateur une pluralité de faisceaux desservant des zones géographiques différentes à la surface de la Terre. De manière générale, toute technique connue de formation de faisceaux (utilisant une source par faisceau - « Single Feed Per Beam » dans la littérature anglo-saxonne - ou utilisant plusieurs sources par faisceau - « Multi Feed Per Beam » dans la littérature anglo-saxonne - avec un réseau de formation de faisceaux fixe ou variable ou utilisant une antenne active, etc.) peut être mise en œuvre sur le lien utilisateur, y compris utilisant une technique à saut de faisceaux (« beam hopping » dans la littérature anglo-saxonne).

L'utilisation d'un module utilisateur 11 multifaisceaux est particulièrement avantageuse en ce qu'elle permet d'utiliser au mieux l'augmentation de capacité offerte par la liaison optique sur le lien passerelle. En effet, l'utilisation de faisceaux permet de réutiliser, d'un faisceau à un autre, de mêmes bandes de fréquences radioélectriques. Ainsi, si l'on désigne par N_{F} le nombre de faisceaux et par D_{MAX} le débit de données maximal dans chaque faisceau, alors le débit de données maximal sur le lien utilisateur peut être égal à N_{F}·D_{MAX}. Dans les systèmes de télécommunications par satellite conventionnels, il n'est pas possible de fonctionner au débit de données maximal D_{MAX} dans chaque faisceau car, la liaison sur le lien passerelle étant une liaison radioélectrique, le débit de données maximal sur le lien utilisateur est généralement trop important pour le lien passerelle. Ce n'est plus le cas avec une liaison optique sur le lien passerelle de sorte que, lorsque celle-ci est disponible, il est possible de fonctionner au débit de données maximal dans chaque faisceau.

Alternativement ou en complément, le module utilisateur 11 comporte un ou plusieurs circuits optiques et est adapté à échanger des données sous la forme de signaux optiques avec au moins un terminal utilisateur optique. De telles dispositions permettent d'offrir à un tel terminal utilisateur optique (qui peut être un terminal utilisateur hybride, c'est-à-dire à la fois radioélectrique et optique) un débit de données maximal plus important lorsque la liaison optique est disponible à la fois entre le module utilisateur 11 et le terminal utilisateur optique, et entre le module passerelle 12 et la station passerelle optique 23.

La figure 2 représente schématiquement un exemple de réalisation d'un système 20 de télécommunications par satellite comportant un satellite à passerelle optique 22 comportant une charge utile 10 telle que décrite en référence à la figure 1, en considérant le cas où le module passerelle 12 est hybride (à la fois optique et radioélectrique). Dans l'exemple illustré par la figure 2, le système 20 de télécommunications par satellite comporte en outre :
- un terminal utilisateur 21,
- une station passerelle radioélectrique 24,
- une station passerelle optique 23.

La station passerelle radioélectrique 24 et la station passerelle optique 23 sont reliées à un cœur de réseau 30. Dans l'exemple illustré par la figure 2, la station passerelle optique 23 et la station passerelle radioélectrique 24 sont distinctes. Rien n'exclut cependant, suivant d'autres exemples, d'avoir une seule et même station passerelle hybride, à la fois optique et radioélectrique.

Les systèmes de télécommunications par satellite haut débit conventionnels comportent en général plusieurs stations passerelles radioélectriques 24. Dans un système 20 de télécommunications par satellite selon l'invention, il est possible de déployer plusieurs stations passerelles optiques 23. Afin de réduire le nombre (et les coûts d'exploitation) des sites à déployer pour un opérateur, il est préférable de déployer la ou les stations passerelles optiques 23 sur les mêmes sites que ceux utilisés pour les stations passerelles radioélectriques 24, par exemple sur les sites qui permettent d'assurer la meilleure disponibilité de la liaison optique.

Le satellite à passerelle optique 22 est par exemple en orbite géostationnaire (« Geostationary Orbit » ou GEO dans la littérature anglo-saxonne), ou en orbite basse altitude (« Low Earth Orbit » ou LEO), ou en orbite moyenne altitude (« Medium Earth Orbit » ou MEO), etc.

Dans la partie a) de la figure 2, il existe un trajet optique entre le satellite à passerelle optique 22 et la station passerelle optique 23, de sorte qu'il est possible d'établir une liaison optique. Dans ce cas, les échanges de données sur le lien passerelle se font de préférence avec la station passerelle optique 23, sous la forme de signaux optiques (en trait discontinu sur la figure 2), afin de bénéficier d'une meilleure capacité. Les échanges de données sur le lien utilisateur avec le terminal utilisateur 21 se font par exemple sous la forme de signaux radioélectriques (en trait continu sur la figure 2), par exemple dans la bande Ka ou la bande Q/V, etc. Il est également possible, en cas d'existence de trajet optique, d'utiliser à la fois le lien passerelle avec la station passerelle optique 23 et le lien passerelle avec la station passerelle radioélectrique 24. En particulier, lorsque plusieurs terminaux utilisateurs 21 échangent des données avec le satellite à passerelle optique 22, les données des terminaux utilisateurs 21 peuvent être réparties entre le lien passerelle avec la station passerelle optique 23 et le lien passerelle avec la station passerelle radioélectrique 24.

Dans la partie b) de la figure 2, il n'existe pas de trajet optique entre le satellite à passerelle optique 22 et la station passerelle optique 23, du fait de la présence de nuages, de sorte qu'il n'est pas possible d'établir une liaison optique sur le lien passerelle. Dans ce cas, les échanges de données sur le lien passerelle se font avec la station passerelle radioélectrique 24, sous la forme de signaux radioélectriques.

La figure 3 représente schématiquement une variante de réalisation du système 20 de télécommunications par satellite de la figure 2, dans laquelle le module passerelle du satellite à passerelle optique 22 est uniquement optique.

Par rapport à l'exemple illustré par la figure 2, le système 20 de télécommunications par satellite comporte en outre un satellite en orbite terrestre, dit satellite à passerelle exclusivement radioélectrique 25. Le satellite à passerelle exclusivement radioélectrique 25 comporte un module de communication, dit module utilisateur (non représenté sur les figures), adapté à échanger des données avec le terminal utilisateur 21. De préférence, le module utilisateur du satellite à passerelle exclusivement radioélectrique 25 est un module de communication multifaisceaux. Le satellite à passerelle exclusivement radioélectrique 25 comporte également un module de communication, dit module passerelle (non représenté sur les figures) adapté à échanger des données uniquement sous la forme de signaux radioélectriques sur le lien passerelle, avec la station passerelle radioélectrique 24.

L'exemple illustré par la figure 3 correspond notamment au cas d'une augmentation de la capacité d'un système de télécommunications par satellite conventionnel existant, par l'ajout d'un satellite à passerelle optique 22 et d'une station passerelle optique 23.

Dans des modes préférés de réalisation, le module utilisateur du satellite à passerelle exclusivement radioélectrique 25 et le module utilisateur 11 du satellite à passerelle optique 22, qui desservent éventuellement différents faisceaux, fonctionnement tous deux dans la même bande de fréquences radioélectriques, comme par exemple la bande Ka ou la bande Q/V, etc. Une telle solution est avantageuse, en particulier dans le cas d'une augmentation de capacité d'un système de télécommunications par satellite existant, car elle est compatible avec les terminaux utilisateurs existants qui n'ont alors pas à être modifiés ou échangés, sous réserve toutefois d'être équipés de moyens de pointage permettant de pointer soit vers le satellite à passerelle exclusivement radioélectrique 25 soit vers le satellite à passerelle optique 22. Toutefois, dans un système de télécommunications par satellite existant comportant des satellites en orbite défilante (par exemple en orbite LEO), les terminaux utilisateurs sont en permanence en train de passer d'un satellite à un autre pour échanger des données. Pour ce faire, de tels terminaux utilisateurs disposent donc déjà de moyens de pointage (mécaniques et/ou électroniques dans le cas d'une antenne réseau) pour passer d'un satellite à un autre.

Rien n'exclut cependant, suivant d'autres exemples, d'utiliser des bandes de fréquences radioélectriques différentes sur le lien utilisateur du satellite à passerelle exclusivement radioélectrique 25 (par exemple la bande Ka) et sur le lien utilisateur du satellite à passerelle optique 22 (par exemple la bande Q/V). Une telle solution peut cependant ne pas être compatible avec les terminaux utilisateurs existants, de sorte que l'augmentation de capacité peut ne bénéficier alors qu'à certains terminaux utilisateurs capables de fonctionner dans des bandes fréquentielles radioélectriques différentes. Cependant, l'utilisation de bandes de fréquences radioélectriques différentes permet de simplifier la gestion des interférences entre les deux types de liens utilisateurs lors de l'augmentation de capacité, du fait que ceux-ci seraient alors suffisamment espacés dans le domaine fréquentiel.

Dans la partie a) de la figure 3, il existe un trajet optique entre le satellite à passerelle optique 22 et la station passerelle optique 23, de sorte qu'il est possible d'établir une liaison optique. Dans ce cas, le terminal utilisateur 21 échange de préférence des données avec le satellite à passerelle optique 22, et les échanges de données sur le lien passerelle se font avec la station passerelle optique 23 (en trait discontinu sur la figure 3).

Dans la partie b) de la figure 3, il n'existe pas de trajet optique entre le satellite à passerelle optique 22 et la station passerelle optique 23, du fait de la présence de nuages, de sorte qu'il n'est pas possible d'établir une liaison optique sur le lien passerelle. Dans ce cas, le terminal utilisateur 21 échange des données avec le satellite à passerelle exclusivement radioélectrique 25, et les échanges de données sur le lien passerelle se font avec la station passerelle radioélectrique 24 (en trait continu sur la figure 3).

Rien n'exclut, suivant d'autres exemples, d'avoir un satellite à passerelle optique 22 comportant un module passerelle 12 hybride (à la fois optique et radioélectrique). Dans un tel cas, s'il n'est pas possible d'établir une liaison optique sur le lien passerelle du satellite à passerelle optique 22 (partie b) de la figure 3), alors les données du terminal utilisateur 21 peuvent être échangées avec la station passerelle radioélectrique 24 par l'intermédiaire du satellite à passerelle exclusivement radioélectrique 25 et/ou par l'intermédiaire du satellite à passerelle optique 22.

En outre, dans l'exemple illustré par la figure 3, le module utilisateur 11 du satellite à passerelle optique 22 pourrait également être remplacé par un module de communication inter-satellite, de préférence optique, adapté à échanger des données sur un lien inter-satellite avec le satellite à passerelle exclusivement radioélectrique 25. Dans un tel cas, s'il existe un trajet optique entre le satellite à passerelle optique 22 et la station passerelle optique 23, le terminal utilisateur 21 échange de préférence des données avec la station passerelle optique 23, par l'intermédiaire du satellite à passerelle exclusivement radioélectrique 25 et du satellite à passerelle optique 22, lesquels échangent des données entre eux sur le lien inter-satellite.

Sur les exemples illustrés par les figures 2 et 3, le système 20 de télécommunications par satellite comporte un terminal utilisateur 21, un satellite à passerelle optique 22, une station passerelle optique 23, une station passerelle radioélectrique 24 et, sur la figure 3, un satellite à passerelle exclusivement radioélectrique 25. Bien entendu, le système 20 de télécommunications par satellite peut comporter, suivant d'autres exemples, plusieurs terminaux utilisateurs 21 et/ou plusieurs stations passerelles radioélectriques 24 et/ou plusieurs stations passerelles optiques 23 et/ou plusieurs satellites à passerelle optique 22 et/ou plusieurs satellites à passerelle exclusivement radioélectrique 25.

Dans des modes préférés de réalisation, le système 20 de télécommunications par satellite comporte au moins deux stations passerelles optiques 23 distantes agencées de sorte à permettre l'existence simultanée de trajets optiques entre le satellite à passerelle optique 22 et chacune de la pluralité de stations passerelles optiques 23. Dans de tels modes de réalisation, la probabilité d'avoir la possibilité d'établir une liaison optique sur le lien passerelle du satellite à passerelle optique 22 est améliorée. En effet, même en présence de nuages entre le satellite à passerelle optique 22 et une station passerelle optique 23, il peut exister un trajet optique entre ledit satellite à passerelle optique 22 et une autre station passerelle optique 23. De telles dispositions permettent d'améliorer la disponibilité de la liaison optique sur le lien passerelle. De préférence, les stations passerelles optiques sont séparées d'une distance suffisante (par exemple supérieure à 50 km, voire supérieure à 100 km) pour assurer une dé-corrélation des phénomènes météorologiques.

Il est à noter que, lorsque le système 20 de télécommunications par satellite comporte plusieurs stations passerelles optiques 23, celles-ci ne sont pas nécessairement toutes actives simultanément. Par exemple, l'une des stations passerelles optiques 23 peut n'être activée qu'en remplacement d'une autre station passerelle optique 23, lorsque cette autre station passerelle optique 23 est en panne ou est masquée par des nuages. Une station passerelle optique 23 qui n'est pas active n'augmente donc pas la capacité maximale du système 20 de télécommunications par satellite, puisqu'elle n'est utilisée qu'en remplacement d'une autre station passerelle optique 23, mais permet d'améliorer la capacité moyenne par une amélioration de la disponibilité d'une liaison optique sur le lien passerelle.

Pour offrir une capacité optique maximale C_{OPT} au niveau du système 20 de télécommunications par satellite, il est avantageux de déployer une pluralité (typiquement entre deux et cinq) de stations passerelles optiques 23 actives à faible capacité (et donc à faible coût), c'est-à-dire offrant chacune une capacité inférieure à C_{OPT}, plutôt qu'une seule station passerelle optique 23 à forte capacité (et donc à fort coût) offrant à elle seule la capacité C_{OPT}.

Une telle pluralité de stations passerelles optiques 23 est par exemple regroupée au sein d'un réseau qui peut soit être opéré par l'opérateur qui possède les satellites, soit être opéré par une autre entité qui permettrait l'accès à son réseau, par exemple comme un service.

La séparation géographique des stations passerelles optiques 23 permet d'augmenter significativement la capacité optique moyenne. En effet, la disponibilité d'une liaison optique sur le lien passerelle est améliorée puisque la probabilité que, à un instant donné, aucune liaison optique ne soit disponible est bien plus faible que dans le cas où le système 20 de télécommunications par satellite ne comporte qu'une seule station passerelle optique 23 à forte capacité. Pour améliorer la capacité optique moyenne et la disponibilité d'une liaison optique, il est possible de prévoir deux stations passerelles optiques 23 à forte capacité, dont l'une seulement est active à chaque instant. Toutefois, il s'avérera généralement plus économique de déployer une pluralité de stations passerelles optiques 23 actives à faible capacité plutôt que deux stations passerelles optiques à forte capacité dont l'une seulement est active. En outre, le déploiement d'une pluralité de stations passerelles optiques 23 à faible capacité peut se faire plus progressivement, afin d'étaler l'investissement au gré de l'évolution de la demande en capacité.

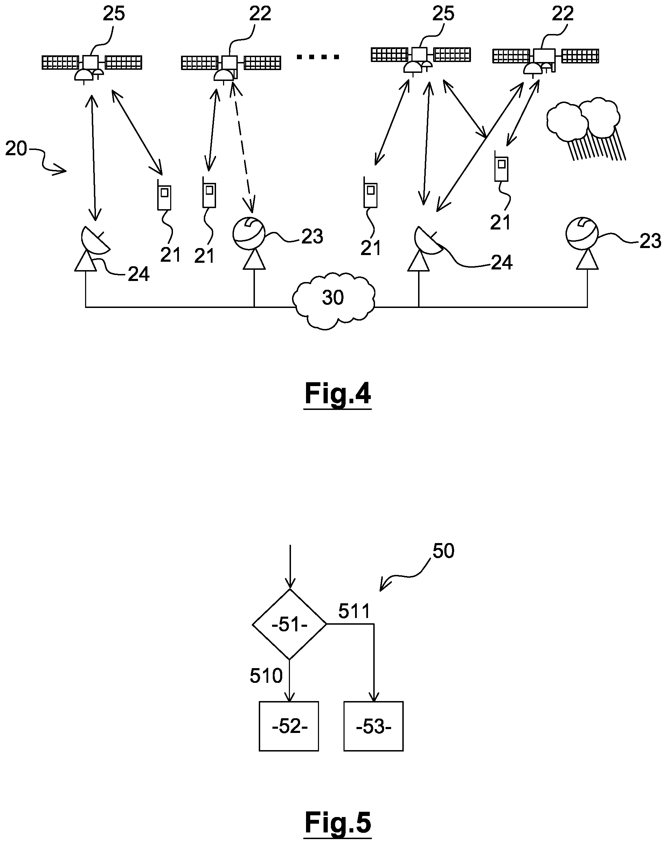

La figure 4 représente schématiquement un mode préféré de réalisation d'un système 20 de télécommunications par satellite, comportant une pluralité de satellites à passerelle exclusivement radioélectrique 25 et une pluralité de satellites à passerelle optique 22 en orbite LEO.

De préférence, les satellites à passerelle optique 22 sont mis à poste, dans un plan de la constellation, de telle sorte qu'il existe toujours un ou plusieurs satellites à passerelle exclusivement radioélectrique 25 intercalés entre deux satellites à passerelle optique 22. D'un point de vue opérationnel, un opérateur peut par exemple déployer tout d'abord une constellation de satellites à passerelle exclusivement radioélectrique 25. Ensuite, afin d'augmenter la capacité de son système de télécommunications par satellite, l'opérateur peut lancer des satellites à passerelle optique 22, intercalés entre les satellites à passerelle exclusivement radioélectrique 25 précédents.

Dans l'exemple non limitatif illustré par la figure 4, le système 20 de télécommunications par satellite comporte en outre une pluralité de stations passerelles radioélectriques 24 et une pluralité de stations passerelles optiques 23. Il est à noter que les stations passerelles optiques 23 sont distinctes entre elles. Toutefois, une station passerelle optique 23 peut, dans le système 20 de télécommunications par satellite, être confondue avec une station passerelle radioélectrique 24. Les stations passerelles optiques 23 sont de préférence situées dans des zones géographiques où la densité de trafic de données est la plus forte (pour en augmenter la capacité) et/ou où la disponibilité de la liaison optique est la plus favorable (par exemple dans des zones géographiques sèches ou en bordure de zones géographiques humides).

Par exemple, les échanges de données avec les terminaux utilisateurs 21 se font exclusivement sous la forme de signaux radioélectriques. Suivant un exemple non limitatif :
- les échanges de données sur les liens utilisateurs des satellites à passerelle exclusivement radioélectrique 25 se font dans la bande Ka,
- les échanges de données sur les liens passerelles des satellites à passerelle exclusivement radioélectrique 25 se font dans les bandes Q (sens montant) et V (sens descendant),
- les échanges de données sur les liens utilisateurs des satellites à passerelle optique 22 se font dans les bandes Q (sens montant) et V (sens descendant).

Rien n'exclut cependant, suivant d'autres exemples de considérer d'autres bandes de fréquences radioélectriques. Notamment, il est possible de considérer la ou les mêmes bandes de fréquences radioélectriques sur les liens utilisateurs des satellites à passerelle exclusivement radioélectrique 25 et des satellites à passerelle optique, par exemple la bande Ka.

Un terminal utilisateur 21 peut échanger des données simultanément avec un ou deux satellites, par conséquent via un ou deux liens utilisateur. Ces données peuvent être en provenance d'une pluralité de stations passerelles soit exclusivement radioélectriques, soit exclusivement optiques, soit des deux types à la fois. De manière analogue, un même faisceau peut contenir des terminaux utilisateurs 21 qui échangent des données avec des stations passerelles soit exclusivement radioélectriques, soit exclusivement optiques, soit des deux types à la fois.

Dans l'exemple non limitatif illustré par la figure 4, le système 20 de télécommunications par satellite comporte à la fois au moins un satellite à passerelle optique 22 dont le module passerelle 12 est exclusivement optique (partie gauche de la figure 4) et au moins un satellite à passerelle optique 22 dont le module passerelle 12 est hybride, c'est-à-dire à la fois optique et radioélectrique (partie droite de la figure 4). Rien n'exclut, suivant d'autres exemples, d'avoir un système 20 de télécommunications par satellite dont le ou les satellites à passerelle optique 22 comportent tous un module passerelle 12 exclusivement radioélectrique, ou dont le ou les satellites à passerelle optique 22 comportent tous un module passerelle 12 hybride.

Dans des modes particuliers de réalisation, le système 20 de télécommunications par satellite comporte également un module de contrôle (non représenté sur les figures) dudit système 20 de télécommunications par satellite. En particulier, le module de contrôle détermine si les données d'un ou de plusieurs terminaux utilisateurs 21 doivent être échangées avec une station passerelle radioélectrique 24 ou avec une station passerelle optique 23, et route lesdites données en conséquence, vers ladite station passerelle radioélectrique 24 ou vers ladite station passerelle optique 23.

Le module de contrôle comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter. Alternativement ou en complément, le module de contrôle comporte un ou des circuits logiques programmables (FPGA, PLD, etc.), et/ou un ou des circuits intégrés spécialisés (ASIC, etc.), et/ou un ensemble de composants électroniques discrets, etc.

En d'autres termes, le module de contrôle comporte un ensemble de moyens configurés de façon logicielle (produit programme d'ordinateur spécifique) et/ou matérielle (FPGA, PLD, ASIC, composants électroniques discrets, etc.) pour contrôler le système 20 de télécommunications par satellite.

Le module de contrôle est par exemple entièrement intégré dans l'un des équipements du système 20 de télécommunications par satellite, ou encore distribué sur plusieurs desdits équipements. Par exemple, dans le cas illustré par la figure 2, le module de contrôle peut être entièrement intégré dans le satellite à passerelle optique 22.

Dans des modes préférés de réalisation, le module de contrôle est intégré dans une station sol, et contrôle par exemple à distance différents équipements du système 20 de télécommunications par satellite, pour notamment router les données des terminaux utilisateurs 21 vers une station passerelle radioélectrique 24 et/ou vers une station passerelle optique 23.

La figure 5 représente schématiquement les principales étapes d'un procédé 50 de contrôle d'un système 20 de télécommunications par satellite, mis en œuvre par le module de contrôle. Tel qu'illustré par la figure 5, lorsque plusieurs terminaux utilisateurs 21 sont adaptés à échanger des données avec un satellite à passerelle optique 22 et avec un satellite à passerelle exclusivement radioélectrique 25, ledit procédé 50 de contrôle comporte des étapes de :
- 51 détermination si un trajet optique existe entre le satellite à passerelle optique 22 et une station passerelle optique 23,
- en cas d'absence de trajet optique (référence 510 sur la figure 5) : un routage 52 des données des terminaux utilisateurs 21 vers une station passerelle radioélectrique 24,
- en cas d'existence de trajet optique (référence 511 sur la figure 5) : un routage 53 d'au moins une partie des données des terminaux utilisateurs vers la station passerelle optique 23.

Au cours de l'étape 51, il est déterminé si un trajet optique existe entre le satellite à passerelle optique 22 et une station passerelle optique 23.

Par exemple, il est possible d'essayer d'établir une liaison optique entre le satellite à passerelle optique 22 et une station passerelle optique 23. Si l'établissement de la liaison optique échoue, cela signifie qu'il n'existe pas de trajet optique. Si l'établissement de la liaison optique réussit, cela signifie au contraire qu'il existe un trajet optique.

Il est à noter que l'étape 51 ne cherche pas nécessairement à déterminer si un trajet existe à l'instant présent, mais peut au contraire chercher à déterminer si un trajet optique est susceptible d'exister à un instant ultérieur, afin d'anticiper le routage des données des terminaux utilisateurs 21. Par exemple, il est possible de prendre en compte des prévisions météorologiques afin de déterminer si, à un instant ultérieur, le trajet optique est susceptible d'être bloqué par des nuages, empêchant l'établissement de la liaison optique. Cela est particulièrement utile, notamment, dans le cas de satellites en orbite LEO, afin de déterminer s'il sera possible d'établir une liaison optique lorsque le satellite à passerelle optique 22 survolera une zone géographique donnée. Dans le cas d'un système 20 de télécommunications par satellite comportant une pluralité de satellites à passerelle optique 22 en orbite LEO, il est également possible, pour déterminer s'il sera possible d'établir une liaison optique lorsqu'un satellite à passerelle optique 22 donné survolera ultérieurement une zone géographique donnée, d'utiliser des informations recueillies pour un autre satellite à passerelle optique 22 qui vient de ou qui s'apprête à survoler ladite zone géographique. En outre, le blocage du trajet optique peut renseigner le système 20 de télécommunications par satellite sur des phénomènes météorologiques pouvant dégrader en partie la liaison radioélectrique sur les liens utilisateurs ou sur le lien passerelle avec la station passerelle radioélectrique 24. Le système 20 de télécommunications par satellite peut utiliser des techniques d'adaptation de débit de données connues de l'homme du métier (adaptation du niveau de codage, du type de modulation et/ou du rythme symbole) permettant de garantir l'échange de données, malgré des conditions de propagation plus difficiles.

Lorsqu'il n'existe pas de trajet optique (référence 510 sur la figure 5), les données des terminaux utilisateurs sont routées vers une station passerelle radioélectrique 24. Lorsqu'il existe un trajet optique (référence 511 sur la figure 5) les données des terminaux utilisateurs 21 peuvent être routées vers une station passerelle optique et/ou vers une station passerelle radioélectrique 24. La décision de router les données d'un terminal utilisateur 21 vers la station passerelle optique 23 et/ou vers la station passerelle radioélectrique 24 peut prendre en compte au moins un paramètre parmi les paramètres suivants :
- débit des données requis pour chaque terminal utilisateur 21,
- niveau de qualité de service requis pour chaque terminal utilisateur,
- type d'application utilisé par chaque terminal utilisateur,
- nombre de terminaux utilisateurs à servir par faisceau, etc.

Dans le cas d'un système 20 de télécommunications par satellite tel qu'illustré sur la figure 3, c'est-à-dire comportant au moins un satellite à passerelle exclusivement radioélectrique 25, alors lorsqu'il n'existe pas de trajet optique (référence 510 sur la figure 5) l'étape 52 de routage revient par exemple à router les données des terminaux utilisateurs 21 vers un satellite à passerelle exclusivement radioélectrique 25 (en particulier si le satellite à passerelle optique 22 ne dispose pas de module utilisateur 11 hybride). Lorsqu'il existe un trajet optique (référence 511 sur la figure 5), l'étape 53 de routage revient à répartir les terminaux utilisateurs 21 entre le satellite à passerelle exclusivement radioélectrique 25 et le satellite à passerelle optique 22. La répartition peut consister, par exemple, à router les données de tous les terminaux utilisateurs 21 vers le satellite à passerelle optique 22.

Dans des modes préférés de mise en œuvre, le procédé 50 de contrôle comporte, alternativement ou en complément des modes de mise en œuvre décrits ci-dessus, un contrôle du débit de données de chaque terminal utilisateur 21 en fonction de l'existence ou de l'absence d'un trajet optique entre le satellite à passerelle optique 22 et une station passerelle optique 23. Par exemple, le débit de données de tout ou partie des terminaux utilisateurs 21 peut être augmenté en cas de présence de trajet optique, par rapport au cas où il n'existe pas de trajet optique entre le satellite à passerelle optique 22 et une station passerelle optique 23, afin de tenir compte de la capacité sur le lien passerelle (liaison optique ou liaison radioélectrique). Egalement, le débit de données de tout ou partie des terminaux utilisateurs 21 peut être réduit en cas d'absence de trajet optique afin de tenir compte des perturbations météorologiques sur le lien passerelle, qui sont également susceptibles de réduire la qualité de la liaison radioélectrique sur ledit lien passerelle.

Tel qu'indiqué précédemment, il est possible d'augmenter la capacité d'un système de télécommunications par satellite existant comportant uniquement un ou plusieurs satellites à passerelle exclusivement radioélectrique 25. L'augmentation de la capacité d'un système de télécommunications par satellite est décrite ci-dessous pour sa composante spatiale (mise à poste de satellites à passerelle optique 22) et pour sa composante terrestre (déploiement de stations passerelles optiques 23).

Il suffit pour cela de mettre à poste en orbite terrestre au moins un satellite à passerelle optique 22 (c'est-à-dire comportant un module passerelle 12 exclusivement optique ou hybride optique/radioélectrique) pour compléter la constellation dudit système de télécommunications par satellite existant, et d'ajouter en outre au moins une station passerelle optique 23.

Dans le cas où le satellite à passerelle optique 22 mis à poste comporte un module passerelle 12 hybride (optique/radioélectrique), ledit satellite à passerelle optique 22 peut être utilisé même lorsqu'aucune station passerelle optique 23 n'est encore déployée, en utilisant la liaison radioélectrique sur le lien passerelle. Dans un tel cas, l'augmentation de la capacité sur le lien passerelle n'est obtenue que lorsqu'au moins une station passerelle optique 23 est déployée.

Il est à noter que la liaison optique sur le lien passerelle n'est utilisée que lorsqu'il existe un trajet optique. Lorsqu'il n'existe pas de trajet optique, le système de télécommunications par satellite fonctionne comme il fonctionnait avant la mise à poste dudit satellite à passerelle optique 22, au moyen d'une station passerelle radioélectrique 24. Le système de télécommunications par satellite à capacité augmentée peut donc fonctionner avec une seule station passerelle optique 23, et l'ajout de stations passerelles optiques 23 supplémentaires ne vise alors qu'à améliorer la capacité maximale et/ou la capacité moyenne du système 20 de télécommunications par satellite.

En désignant par C_{MAX} la capacité maximale offerte par le système 20 de télécommunications par satellite, celle-ci va augmenter au gré des déploiements progressifs au sol des stations passerelles optiques 23 actives.

Avant l'augmentation de capacité, le système de télécommunications par satellite comporte une ou plusieurs stations passerelles radioélectriques 24 offrant une capacité radioélectrique maximale C_{RF}, et la capacité maximale C_{MAX} est égale à la capacité radioélectrique maximale C_{RF} (C_{MAX} = C_{RF}).

Lorsque l'opérateur souhaite augmenter la capacité maximale du système de télécommunications par satellite, une ou plusieurs stations passerelles optiques 23 actives peuvent être déployées, offrant ensemble une capacité optique maximale C_{OPT}. La capacité maximale C_{MAX} du système 20 de télécommunications par satellite est alors augmentée : C_{MAX} = C_{RF} + C_{OPT}.

A titre d'exemple, on peut viser à l'issue du déploiement complet de toutes les stations passerelles la répartition suivante : C_{RF} = 1/5 x C_{MAX} et C_{OPT} = 4/5 x C_{MAX}. La capacité optique maximale est à distribuer entre toutes les stations passerelles optiques 23 actives déployées. Il est possible de déployer une seule station passerelle optique 23 active à forte capacité offrant à elle seule une capacité 4/5 x C_{MAX}, ou bien déployer par exemple quatre stations passerelles optiques 23 actives à faible capacité et n'offrant chacune qu'une capacité 1/5 x C_{MAX}, mais permettant d'améliorer la disponibilité d'une liaison optique sur le lien passerelle, et donc la capacité optique moyenne du système 20 de télécommunications par satellite. Il est également possible de surdimensionner légèrement la capacité de chacune des stations passerelles optiques 23 à faible capacité, qui offriraient chacune une capacité légèrement supérieure à 1/5 x C_{MAX}, afin d'améliorer la capacité optique moyenne.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention décrite ci-dessus est utilisable dans n'importe quelle bande de fréquences radioélectriques, on peut citer à titre d'exemples les bandes de fréquences radioélectriques classiquement utilisées par les systèmes de télécommunications par satellite, telles que : C, L, S, X, Ku, Ka, Q/V. L'invention est également utilisable dans n'importe quelle bande de fréquences optiques, et n'est pas limitée à un type particulier d'orbite terrestre.

La description ci-avant illustre clairement que par ses différentes caractéristiques et leurs avantages, la présente invention atteint les objectifs qu'elle s'était fixés. En particulier, la présente invention permet de bénéficier, sur le lien passerelle du système de télécommunications par satellite, à la fois de la plus forte disponibilité de la liaison radioélectrique et de la plus forte capacité de la liaison optique, lorsque celle-ci est disponible.

En outre, la présente invention permet, suivant les modes de réalisation considérés :
- de s'appuyer sur un système de télécommunications par satellite existant pour le faire évoluer en capacité à moindre coût, en bâtissant sur les infrastructures spatiales et sol déjà existantes et opérationnelles ; cette évolution s'effectue donc dans un contexte de continuité opérationnelle pour les terminaux utilisateurs avec une amélioration possible de leurs services et/ou une augmentation de la capacité système servie par l'opérateur ;
- d'atteindre ponctuellement une capacité très importante (potentiellement supérieure à 1 Térabits/s) avec un seul satellite à passerelle optique à module passerelle 12 hybride, ou avec un seul satellite à passerelle optique 22 et un seul satellite à passerelle exclusivement radioélectrique, par exemple en orbite GEO;
- de limiter l'infrastructure sol à ajouter pour l'opérateur (minimisation de la complexité des modules passerelles des satellites, du nombre de stations passerelles) en limitant le nombre de stations passerelles optiques, grâce au routage des données des terminaux utilisateurs vers les stations passerelles radioélectriques 24 lorsque la liaison optique n'est pas disponible ;
- d'avoir un déploiement progressif en capacité en fonction de l'usage et des souhaits d'investissement par l'opérateur ;
- de traiter la disponibilité au niveau système et non au niveau d'un seul lien passerelle, en intégrant le fait que le lien passerelle peut être une liaison radioélectrique et/ou une liaison optique ; la variation de débit perçue par les terminaux utilisateurs est interprétée comme un taux de contention variable au niveau des stations passerelles ;
- d'être compatible, dans certains modes de réalisation, avec les terminaux utilisateurs existants ;
- de se passer d'un dépôt par l'opérateur d'un dossier règlementaire visant à obtenir une autorisation administrative car l'utilisation de bandes de fréquences optiques n'en a pas besoin ;
- dans le cas de satellites en orbite LEO, l'utilisation de bandes de fréquences optiques présente l'avantage ne pas interférer avec les liaisons radioélectriques existantes de la constellation et également de ne pas interférer avec des liaisons radioélectriques de satellites en orbite GEO, ce qui est avantageux lors du passage des satellites en orbite LEO à l'Equateur.

## Revendications

1. Système (20) de télécommunications par satellite, comportant au moins un terminal utilisateur (21) terrestre, ledit système comportant au moins un satellite en orbite terrestre, dit satellite à passerelle optique (22), comportant une charge utile (10), ladite charge utile comportant :
- un module de communication, dit module passerelle (12), adapté à échanger des données sous la forme de signaux optiques avec au moins une station passerelle optique (23) terrestre et à échanger des données sous la forme de signaux radioélectriques avec au moins une station passerelle radioélectrique (24) terrestre,
**caractérisé en ce que** :
- ladite charge utile (10) comporte un module de communication, dit module utilisateur (11), adapté à échanger des données avec ledit terminal utilisateur (21) terrestre,
- le système (20) de télécommunications par satellite comporte en outre un module de contrôle configuré pour déterminer si un trajet optique existe entre le satellite à passerelle optique (22) et une station passerelle optique (23) et pour router les données du terminal utilisateur (21) vers une station passerelle radioélectrique via au moins ledit module passerelle (12) en cas d'absence de trajet optique.

2. Système (20) selon la revendication 1, dans laquelle le module utilisateur (11) du satellite à passerelle optique (22) est adapté à échanger des données sous la forme de signaux radioélectriques avec le terminal utilisateur (21).

3. Système (20) selon la revendication 2, dans laquelle le module utilisateur (11) du satellite à passerelle optique (22) est adapté en outre à échanger des données sous la forme de signaux optiques avec au moins un terminal utilisateur optique terrestre.

4. Système (20) selon l'une des revendications précédentes, dans lequel le module utilisateur (11) du satellite à passerelle optique (22) est un module de communication multifaisceaux.

5. Système (20) selon l'une des revendications précédentes, dans lequel le satellite à passerelle optique (22) est en orbite terrestre basse altitude.

6. Système (20) selon l'une des revendications précédentes, comportant au moins deux stations passerelles optiques (23) distantes agencées de sorte à permettre l'existence simultanée de trajets optiques entre le satellite à passerelle optique et chacune des deux stations passerelles optiques.

7. Système (20) de télécommunications par satellite, comportant au moins un terminal utilisateur (21) terrestre, et au moins un satellite en orbite terrestre, dit satellite à passerelle optique (22), comportant une charge utile (10), **caractérisé en ce que** ladite charge utile comporte:
- un module de communication, dit module utilisateur (11), adapté à échanger des données avec ledit terminal utilisateur (21) terrestre,
- un module de communication, dit module passerelle (12), adapté à échanger des données sous la forme de signaux optiques avec au moins une station passerelle optique (23) terrestre,
et **en ce que** le système (20) de télécommunications par satellite comportant en outre :
- au moins un autre satellite, dit satellite à passerelle exclusivement radioélectrique (25), comportant un module de communication, dit module utilisateur, adapté à échanger des données avec ledit terminal utilisateur (21), et un module de communication, dit module passerelle, adapté à échanger des données uniquement sous la forme de signaux radioélectriques avec au moins une station passerelle radioélectrique (24),
- un module de contrôle configuré pour déterminer si un trajet optique existe entre le satellite à passerelle optique (22) et une station passerelle optique (23) et pour router les données du terminal utilisateur (21) vers le satellite à passerelle exclusivement radioélectrique en cas d'absence de trajet optique.

8. Système (20) selon la revendication 7, comportant une pluralité de terminaux utilisateurs (21) adaptés à échanger des données avec le satellite à passerelle exclusivement radioélectrique (25) et avec le satellite à passerelle optique (22), le module de contrôle étant configuré pour répartir les terminaux utilisateurs entre le satellite à passerelle exclusivement radioélectrique (25) et le satellite à passerelle optique (22) en cas d'existence de trajet optique entre le satellite à passerelle optique (22) et une station passerelle optique (23).

9. Système (20) selon la revendication 8, dans lequel le module de contrôle est configuré pour répartir lesdits terminaux utilisateurs entre le satellite à passerelle exclusivement radioélectrique (25) et le satellite à passerelle optique (22) en fonction d'au moins un paramètre parmi les paramètres suivants :
- débit des données requis pour chaque terminal utilisateur (21),
- niveau de qualité de service requis pour chaque terminal utilisateur,
- type d'application utilisé par chaque terminal utilisateur,
- nombre de terminaux utilisateurs à servir par faisceau.

10. Système (20) selon l'une des revendications 7 à 9, dans lequel le module de contrôle est configuré pour contrôler le débit de données de chaque terminal utilisateur en fonction de l'existence ou de l'absence d'un trajet optique entre le satellite à passerelle optique (22) et la station passerelle optique (23).

11. Système (20) selon l'une des revendications 7 à 10, dans lequel le satellite à passerelle optique (22) est en orbite terrestre basse altitude.

12. Système (20) selon l'une des revendications 7 à 11, comportant au moins deux stations passerelles optiques (23) distantes agencées de sorte à permettre l'existence simultanée de trajets optiques entre le satellite à passerelle optique et chacune des deux stations passerelles optiques.

13. Procédé de contrôle d'un système (20) de télécommunications par satellite selon l'une des revendications 1 à 6, **caractérisé en ce que** ledit procédé comporte :
- une détermination si un trajet optique existe entre le satellite à passerelle optique (22) et une station passerelle optique (23),
- en cas d'absence de trajet optique, un routage des données du terminal utilisateur (21) via au moins ledit module passerelle (12) vers une station passerelle radioélectrique (24).

14. Procédé (50) de contrôle d'un système (20) de télécommunications par satellite selon l'une des revendications 7 à 12, **caractérisé en ce que** plusieurs terminaux utilisateurs (21) étant adaptés à échanger des données avec le satellite à passerelle exclusivement radioélectrique (25) et avec le satellite à passerelle optique (22), ledit procédé comporte :
- une détermination (51) si un trajet optique existe entre le satellite à passerelle optique (22) et une station passerelle optique (23) terrestre,
- en cas d'absence de trajet optique : un routage (52) des données des terminaux utilisateurs (21) vers le satellite à passerelle exclusivement radioélectrique (25),
- en cas d'existence de trajet optique : une répartition (53) des terminaux utilisateurs entre le satellite à passerelle exclusivement radioélectrique (25) et le satellite à passerelle optique (22).

15. Procédé (50) selon la revendication 14, dans lequel la répartition des terminaux utilisateurs (21) entre le satellite à passerelle exclusivement radioélectrique (25) et le satellite à passerelle optique (22) est déterminée en fonction d'au moins un paramètre parmi les paramètres suivants :
- débit des données requis pour chaque terminal utilisateur (21),
- niveau de qualité de service requis pour chaque terminal utilisateur,
- type d'application utilisé par chaque terminal utilisateur,
- nombre de terminaux utilisateurs à servir par faisceau.

16. Procédé (50) selon l'une des revendications 14 à 15, comportant un contrôle d'un débit de données de chaque terminal utilisateur (21) en fonction de l'existence ou de l'absence d'un trajet optique entre le satellite à passerelle optique (22) et une station passerelle optique (23).

17. Produit programme d'ordinateur **caractérisé en ce qu'**il comporte un ensemble d'instructions de code de programme qui, lorsqu'elles sont exécutées par un processeur, configurent ledit processeur pour mettre en œuvre un procédé (50) de contrôle selon l'une des revendications 13 à 16.

18. Procédé d'augmentation de capacité d'un système (20) de télécommunications par satellite comportant au moins un terminal utilisateur (21) terrestre et au moins un satellite en orbite terrestre, dit satellite à passerelle exclusivement radioélectrique (25), comportant un module de communication, dit module utilisateur, adapté à échanger des données avec ledit terminal utilisateur (21), et un module de communication, dit module passerelle, adapté à échanger des données uniquement sous la forme de signaux radioélectriques avec au moins une station passerelle radioélectrique (24), **caractérisé en ce qu'**il comporte :
- une mise à poste en orbite terrestre d'au moins un autre satellite, dit satellite à passerelle optique (22), comportant un module de communication, dit module utilisateur (11), adapté à échanger des données avec ledit terminal utilisateur (21) et un module de communication, dit module passerelle (12), adapté à échanger des données sous la forme de signaux optiques avec au moins une station passerelle optique (23) terrestre,
- après la mise à poste du satellite à passerelle optique (22) : un contrôle du système (20) de télécommunications par satellite conformément à un procédé (50) de contrôle selon l'une des revendications 14 à 16.

19. Procédé selon la revendication 18, comportant un déploiement progressif de stations passerelles optiques (23).

## Patentansprüche

1. Satellitentelekommunikationssystem (20), mindestens ein terrestrisches Nutzerendgerät (21) beinhaltend, wobei das System mindestens einen Satelliten in der terrestrischen Umlaufbahn, Satellit mit optischem Gateway (22) genannt, beinhaltet, der eine Nutzlast (10) beinhaltet, wobei die Nutzlast Folgendes beinhaltet:
- ein Kommunikationsmodul, Gateway-Modul (12) genannt, das ausgeführt ist, um Daten in Form von optischen Signalen mit mindestens einer terrestrischen optischen Gateway-Station (23) auszutauschen, und Daten in Form von funkelektrischen Signalen mit mindestens einer terrestrischen funkelektrischen Gateway-Station (24) auszutauschen,
**dadurch gekennzeichnet, dass**:
- die Nutzlast (10) ein Kommunikationsmodul, Nutzermodul (11) genannt, beinhaltet, das ausgeführt ist, um Daten mit dem terrestrischen Nutzerendgerät (21) auszutauschen,
- das Satellitentelekommunikationssystem (20) weiter ein Kontrollmodul beinhaltet, das konfiguriert ist, um zu bestimmen, ob zwischen dem Satelliten mit optischem Gateway (22) und einer optischen Gateway-Station (23) ein optischer Weg existiert, und um bei Abwesenheit eines optischen Weges Daten von dem Nutzerendgerät (21) über mindestens das Gateway-Modul (12) zu einer funkelektrischen Gateway-Station zu routen.

2. System (20) nach Anspruch 1, wobei das Nutzermodul (11) des Satelliten mit optischem Gateway (22) ausgeführt ist, um Daten in Form von funkelektrischen Signalen mit dem Nutzerendgerät (21) auszutauschen.

3. System (20) nach Anspruch 2, wobei das Nutzermodul (11) des Satelliten mit optischem Gateway (22) ausgeführt ist, um weiter Daten in Form von optischen Signalen mit mindestens einem terrestrischen optischen Nutzerendgerät auszutauschen.

4. System (20) nach einem der vorstehenden Ansprüche, wobei das Nutzermodul (11) des Satelliten mit optischem Gateway (22) ein Mehrstrahl-Kommunikationsmodul ist.

5. System (20) nach einem der vorstehenden Ansprüche, wobei sich der Satellit mit optischem Gateway (22) auf niedriger terrestrischer Umlaufbahn befindet.

6. System (20) nach einem der vorstehenden Ansprüche, mindestens zwei beabstandete optische Gateway-Stationen (23) beinhaltend, die derart angeordnet sind, um die gleichzeitige Existenz optischer Wege zwischen dem Satelliten mit optischem Gateway und jeder der beiden optischen Gateway-Stationen zu ermöglichen.

7. Satellitentelekommunikationssystem (20), mindestens ein terrestrisches Nutzerendgerät (21) und mindestens einen Satelliten in der terrestrischen Umlaufbahn, Satellit mit optischem Gateway (22) genannt, beinhaltend, der eine Nutzlast (10) beinhaltet, **dadurch gekennzeichnet, dass** die Nutzlast Folgendes beinhaltet:
- ein Kommunikationsmodul, Nutzermodul (11) genannt, das ausgeführt ist, um Daten mit dem terrestrischen Nutzerendgerät (21) auszutauschen,
- ein Kommunikationsmodul, Gateway-Modul (12) genannt, das ausgeführt ist, um Daten in Form von optischen Signalen mit mindestens einer optischen terrestrischen Gateway-Station (23) auszutauschen,
und dadurch, dass das Satellitentelekommunikationssystem (20) weiter Folgendes beinhaltet:
- mindestens einen weiteren Satelliten, Satellit mit ausschließlich funkelektrischem Gateway (25) genannt, der ein Kommunikationsmodul, Nutzermodul genannt, beinhaltet, das ausgeführt ist, um Daten mit dem Nutzerendgerät (21) auszutauschen, und ein Kommunikationsmodul, Gateway-Modul genannt, das ausgeführt ist, um Daten nur in der Form von funkelektrischen Signalen mit mindestens einer funkelektrischen Gateway-Station (24) auszutauschen,
- ein Kontrollmodul, das konfiguriert ist, um zu bestimmen, ob ein optischer Weg zwischen dem Satelliten mit optischem Gateway (22) und einer optischen Gateway-Station (23) existiert, und um bei Abwesenheit eines optischen Weges die Daten von dem Nutzerendgerät (21) zu dem Satelliten mit ausschließlich funkelektrischem Gateway zu routen.

8. System (20) nach Anspruch 7, eine Vielzahl von Nutzerendgeräten (21) beinhaltend, die ausgeführt sind, um Daten mit dem Satelliten mit ausschließlich funkelektrischem Gateway (25) und mit dem Satelliten mit optischem Gateway (22) auszutauschen, wobei das Kontrollmodul konfiguriert ist, um die Nutzerendgeräte im Falle einer Existenz eines optischen Weges zwischen dem Satelliten mit optischem Gateway (22) und einer optischen Gateway-Station (23) zwischen dem Satelliten mit ausschließlich funkelektrischem Gateway (25) und dem Satelliten mit optischem Gateway (22) zu verteilen.

9. System (20) nach Anspruch 8, wobei das Kontrollmodul konfiguriert ist, um die Nutzerendgeräte zwischen dem Satelliten mit ausschließlich funkelektrischem Gateway (25) und dem Satelliten mit optischem Gateway (22) in Abhängigkeit von mindestens einem Parameter aus den folgenden Parametern zu verteilen:
- benötigter Datenvolumenstrom für jedes Nutzerendgerät (21),
- benötigte Dienstqualitätsstufe für jedes Nutzerendgerät,
- von jedem Nutzerendgerät verwendeter Applikationstyp,
- Anzahl von je Strahl zu bedienenden Nutzerendgeräten.

10. System (20) nach einem der Ansprüche 7 bis 9, wobei das Kontrollmodul konfiguriert ist, um den Datenvolumenstrom jedes Nutzerendgerätes in Abhängigkeit von der Existenz oder der Abwesenheit eines optischen Weges zwischen dem Satelliten mit optischem Gateway (22) und der optischen Gateway-Station (23) zu kontrollieren.

11. System (20) nach einem der Ansprüche 7 bis 10, wobei sich der Satellit mit optischem Gateway (22) auf niedriger terrestrischer Umlaufbahn befindet.

12. System (20) nach einem der Ansprüche 7 bis 11, mindestens zwei beabstandete optische Gateway-Stationen (23) beinhaltend, die derart angeordnet sind, um die gleichzeitige Existenz optischer Wege zwischen dem Satelliten mit optischem Gateway und jeder der beiden optischen Gateway-Stationen zu ermöglichen.

13. Verfahren zur Kontrolle eines Satellitentelekommunikationssystems (20) nach einem der Ansprüche 1 bis 6, **dadurch gekennzeichnet, dass** das Verfahren Folgendes beinhaltet:
- Bestimmen, ob ein optischer Weg zwischen dem Satelliten mit optischem Gateway (22) und einer optischen Gateway-Station (23) existiert,
- im Falle einer Abwesenheit eines optischen Weges ein Routen der Daten von dem Nutzerendgerät (21) über mindestens das Gateway-Modul (12) zu einer funkelektrischen Gateway-Station (24).

14. Verfahren (50) zur Kontrolle eines Satellitentelekommunikationssystems (20) nach einem der Ansprüche 7 bis 12, **dadurch gekennzeichnet, dass** mehrere Nutzerendgeräte (21) ausgeführt sind, um Daten mit dem Satelliten mit ausschließlich funkelektrischem Gateway (25) und mit dem Satelliten mit optischem Gateway (22) auszutauschen, wobei das Verfahren Folgendes beinhaltet:
- ein Bestimmen (51), ob ein optischer Weg zwischen dem Satelliten mit optischem Gateway (22) und einer terrestrischen optischen Gateway-Station (23) existiert,
- im Falle einer Abwesenheit eines optischen Weges: ein Routen (52) der Daten der Nutzerendgeräte (21) zum Satelliten mit ausschließlich funkelektrischem Gateway (25),
- im Falle einer Existenz eines optischen Weges: ein Verteilen (53) der Nutzerendgeräte zwischen dem Satelliten mit ausschließlich funkelektrischem Gateway (25) und dem Satelliten mit optischem Gateway (22).

15. Verfahren (50) nach Anspruch 14, wobei das Verteilen der Nutzerendgeräte (21) zwischen dem Satelliten mit ausschließlich funkelektrischem Gateway (25) und dem Satelliten mit optischem Gateway (22) in Abhängigkeit von mindestens einem Parameter aus den folgenden Parametern bestimmt wird:
- benötigter Datenvolumenstrom für jedes Nutzerendgerät (21),
- benötigte Dienstqualitätsstufe für jedes Nutzerendgerät,
- von jedem Nutzerendgerät verwendeter Applikationstyp,
- Anzahl von je Strahl zu bedienenden Nutzerendgeräten.

16. Verfahren (50) nach einem der Ansprüche 14 bis 15, eine Kontrolle eines Datenvolumenstroms jedes Nutzerendgerätes (21) in Abhängigkeit von der Existenz oder der Abwesenheit eines optischen Weges zwischen dem Satelliten mit optischem Gateway (22) und einer optischen Gateway-Station (23) beinhaltend.

17. Computerprogrammprodukt, **dadurch gekennzeichnet, dass** es eine Reihe von Programmcodeanweisungen beinhaltet, die, wenn sie von einem Prozessor ausgeführt werden, den Prozessor konfigurieren, um ein Verfahren (50) zur Kontrolle nach einem der Ansprüche 13 bis 16 umzusetzen.

18. Verfahren zur Kapazitätssteigerung eines Satellitentelekommunikationssystems (20), das mindestens ein terrestrisches Nutzerendgerät (21) und mindesten einen Satelliten in der terrestrischen Umlaufbahn, Satellit mit ausschließlich funkelektrischem Gateway (25) genannt, beinhaltet, ein Kommunikationsmodul, Nutzermodul genannt, beinhaltet, das ausgeführt ist, um Daten mit dem Nutzerendgerät (21) auszutauschen, und ein Kommunikationsmodul, Gateway-Modul genannt, das ausgeführt ist, um Daten nur in der Form von funkelektrischen Signalen mit mindestens einer funkelektrischen Gateway-Station (24) auszutauschen, **dadurch gekennzeichnet, dass** es Folgendes beinhaltet:
- ein Postieren in der terrestrischen Umlaufbahn mindestens eines weiteren Satelliten, Satellit mit optischem Gateway (22) genannt, der ein Kommunikationsmodul, Nutzermodul (11) genannt, beinhaltet, das ausgeführt ist, um Daten mit dem Nutzerendgerät (21) auszutauschen, und ein Kommunikationsmodul, Gateway-Modul (12) genannt, das ausgeführt ist, um Daten in Form von optischen Signalen mit mindestens einer terrestrischen optischen Gateway-Station (23) auszutauschen,
- nach dem Postieren des Satelliten mit optischem Gateway (22): eine Kontrolle Satellitentelekommunikationssystems (20) entsprechend einem Verfahren (50) zur Kontrolle nach einem der Ansprüche 14 bis 16.

19. Verfahren nach Anspruch 18, eine progressive Ausbreitung von optischen Gateway-Stationen (23) beinhaltend.

## Claims

1. Satellite telecommunications system (20) comprising at least one terrestrial user terminal (21), **characterised in that** it comprises at least one so-called optical gateway satellite (22) in Earth orbit, comprising a payload (10), said payload comprising:
- a communication module, referred to as a gateway module (12), suitable for exchanging data in the form of optical signals with at least one terrestrial optical gateway station (23), and for exchanging data in the form of radio-frequency signals with at least one terrestrial radio gateway station (24),
**characterized in that**
- the payload comprises a communication module, referred to as a user module (11), suitable for exchanging data with said terrestrial user terminal (21),
- the satellite telecommunications system (20) further comprising a control module configured such that it determines whether an optical path exists between the optical gateway satellite (22) and an optical gateway station (23) and such that it routes the data from the user terminal (21) to a radio gateway station in the absence of any optical path.

2. System (20) according to claim 1, wherein the user module (11) of the optical gateway satellite (22) is suitable for exchanging data in the form of radio-frequency signals with the user terminal (21).

3. System (20) according to claim 2, wherein the user module (11) of the optical gateway satellite (22) is furthermore suitable for exchanging data in the form of optical signals with at least one terrestrial optical user terminal.

4. System (20) according to one of the previous claims, wherein the user module (11) of the optical gateway satellite (22) is a multibeam communication module.

5. System (20) according to one of the previous claims, wherein the optical gateway satellite (22) is in low Earth orbit.

6. System (20) according to one of the previous claims, comprising at least two remote optical gateway stations (23) arranged such that they allow the simultaneous existence of optical paths between the optical gateway satellite and each of the two optical gateway stations.

7. Satellite telecommunications system (20) comprising at least one terrestrial user terminal (21), at least one so-called optical gateway satellite (22) in Earth orbit, comprising a payload (10), **characterized in that** said payload comprising:
- a communication module, referred to as a user module (11), suitable for exchanging data with said terrestrial user terminal (21),
- a communication module, referred to as a gateway module (12), suitable for exchanging data in the form of optical signals with at least one terrestrial optical gateway station (23),
the satellite telecommunications system (20) further comprising:
- at least one other so-called radiofrequency-only gateway satellite (25), comprising a communication module, referred to as a user module, suitable for exchanging data with said user terminal (21), and a communication module, referred to as a gateway module, suitable for exchanging data solely in the form of radio-frequency signals with at least one radio gateway station (24),
- a control module configured such that it determines whether an optical path exists between the optical gateway satellite (22) and an optical gateway station (23) and such that it routes the data from the user terminal (21) to the radiofrequency-only gateway satellite in the absence of any optical path.

8. System (20) according to claim 7, comprising a plurality of user terminals (21) suitable for exchanging data with the radiofrequency-only gateway satellite (25) and with the optical gateway satellite (22), the control module being configured such that it distributes the user terminals between the radiofrequency-only gateway satellite (25) and the optical gateway satellite (22) in the case whereby an optical path exists between the optical gateway satellite (22) and an optical gateway station (23).

9. System (20) according to claim 8, wherein the control module is configured such that it distributes said user terminals between the radiofrequency-only gateway satellite (25) and the optical gateway satellite (22) as a function of at least one parameter from the following group of parameters:
- the data rate required for each user terminal (21),
- the quality of service level required for each user terminal,
- the type of application used by each user terminal,
- the number of user terminals to be fed per beam.

10. System (20) according to one of claims 7 to 9, wherein the control module is configured such that it controls the data rate from each user terminal as a function of the existence or absence of an optical path between the optical gateway satellite (22) and the optical gateway station (23).

11. System (20) according to one of claims 7 to 10, wherein the optical gateway satellite (22) is in low Earth orbit.

12. System (20) according to one of claims 7 to 11, comprising at least two remote optical gateway stations (23) arranged such that they allow the simultaneous existence of optical paths between the optical gateway satellite and each of the two optical gateway stations.

13. Method (50) for controlling a satellite telecommunications system (20) according to one of claims 1 to 6, comprising:
- determining (51) whether an optical path exists between the optical gateway satellite (22) and a terrestrial optical gateway station (23),
- if no optical path exists therebetween: routing (52) the data from the user terminals (21) via at least the gateway module (12) to a radio gateway station (24)

14. Method (50) for controlling a satellite telecommunications system (20) according to one of claims 7 to 12, **characterized in that** a plurality of user terminals (21) being suitable for exchanging data with the radiofrequency-only gateway satellite (25) and with the optical gateway satellite (22), comprising:
- determining (51) whether an optical path exists between the optical gateway satellite (22) and a terrestrial optical gateway station (23),
- if no optical path exists therebetween: routing (52) the data from the user terminals (21) to the radiofrequency-only gateway satellite (25),
- if an optical path exists: distributing (53) the user terminals between the radiofrequency-only gateway satellite (25) and the optical gateway satellite (22).

15. Method (50) according to claim 14, wherein the distribution of the user terminals (21) between the radiofrequency-only gateway satellite (25) and the optical gateway satellite (22) is determined as a function of at least one parameter from the following group of parameters:
- the data rate required for each user terminal (21),
- the quality of service level required for each user terminal,
- the type of application used by each user terminal,
- the number of user terminals to be fed per beam.

16. Method (50) according to either claim 14 or claim 15, comprising the step of controlling a data rate from each user terminal (21) as a function of the existence or absence of an optical path between the optical gateway satellite (22) and an optical gateway station (23).

17. Computer program product, **characterised in that** it comprises a set of program code instructions which, when executed by a processor, configure said processor to implement a control method (50) according to one of claims 13 to 16.

18. Method for increasing the capacity of a satellite telecommunications system (20) comprising at least one terrestrial user terminal (21) and at least one satellite orbiting the Earth, referred to as a radiofrequency-only gateway satellite (25), comprising a communication module, referred to as a user module, suitable for exchanging data with said user terminal (21), and a communication module, referred to as a gateway module, suitable for exchanging data solely in the form of radio-frequency signals with at least one radio gateway station (24), **characterised in that** it comprises:
- stationing at least one other so-called optical gateway satellite (22) in Earth orbit, comprising a communication module, referred to as a user module (11), suitable for exchanging data with said user terminal (21), and a communication module, referred to as a gateway module (12), suitable for exchanging data in the form of optical signals with at least one terrestrial optical gateway station (23),
- after the stationing of the optical gateway satellite (22): controlling the satellite telecommunications system (20) in accordance with a control method (50) according to any of claims 14 to 16.

19. Method according to claim 18, comprising the gradual deployment of optical gateway stations (23).
